# EUROPEAN PATENT SPECIFICATION

(11) **EP 3 440 561 B1**
(45) Date of publication and mention of the grant of the patent: **16.10.2019**
(21) Application number: 16828842.1
(22) Date of filing: 22.12.2016
(51) Int. Cl.: G06F 16/9535

(54) **AUGMENTING MESSAGE EXCHANGE THREADS**
ERWEITERUNG VON NACHRICHTENAUSTAUSCH-THREADS
AUGMENTATION DE FILS D'ÉCHANGE DE MESSAGES

(30) Priority: 17.05.2016 US 201615157155
(43) Date of publication of application: 13.02.2019
(73) Proprietor: Google LLC, Mountain View, CA 94043 (US)
(72) Inventor: SKOBELTSYN, Gleb, Mountain View, California 94043 (US); WENGER, Stephan, Mountain View, California 94043 (US); ADAN, Yariv, Mountain View, California 94043 (US); JUDD, Tilke, Mountain View, California 94043 (US); ETEREVSKY, Oleg, Mountain View, California 94043 (US); BERGENLID, Fredrik, Mountain View, California 94043 (US); BEHZADI, Behshad, Mountain View, California 94043 (US); BAEUML, Martin, Mountain View, California 94043 (US); SHUVAEV, Roman, Mountain View, California 94043 (US); MIRELMANN, Lucas, Mountain View, California 94043 (US)
(74) Representative: Chettle, John Edward
(86) International application number: PCT/US2016/068343
(87) International publication number: WO 2017/200582

(56) References cited:
- US-A1- 2008 201 434
- US-A1- 2012 284 093
- US-A1- 2013 297 317
- US-A1- 2016 055 246

## Description

### Background

Multiple participants may communicate with each other textually via message exchange threads that may be implemented using various technologies, such as text message exchanges, online chat (e.g., instant messenger, Internet relay chat, etc.), social network messaging threads, and so forth. Some client message exchange apps such as text messaging apps, online chat apps, social networking apps, etc., may display at least part of a transcript {e.g., a live or near live record of text and/or images that is updated in real time as the participants converse) of an ongoing message exchange thread as part of a graphical user interface, so that participants can follow the conversation. The ongoing message exchange thread, and hence, the displayed transcript, is typically limited to text or other data such as pictures that participants deliberately and explicitly incorporate into the message exchange thread. Consequently, participants seeking outside information pertinent to the conversation must switch to a different application such as a web browser to obtain the desired information. Switching applications, particularly using mobile devices that often only display a single application at a time, can be distracting and burdensome, and may disrupt the flow of the conversation. US2006/167992 discloses a method for translating received input from a sender to a recipient in an instant messaging dialog.

### Summary

The claims define the subject-matter for protection. The present disclosure is generally directed to methods, apparatus, and computer- readable media (transitory and non-transitory) for examining a message exchange thread between two or more participants to augment the message exchange thread with search-based suggestions and other content. This may give rise to various technical advantages. For example, one technical advantage is that techniques described herein may reduce the need for a participant to leave the discussion to obtain data from other data sources. Another related technical advantage is that less applications may need to be executed on a client device, conserving computing resources of the client device such as processor cycles and memory, as well as battery power. In general, the augmentation of the message exchange thread with search-based suggestions and other content, including graphical elements associated with such content, may reduce the number of user inputs that a user must make to a device in order to access the suggestions and content. This may be of particular benefit to users that have low dexterity, or users who otherwise have difficulties making user inputs to a device. For at least these users, the augmentation of the message exchange thread with the suggestions
and/or other content may increase the reliability and speed of use of the device, e.g. by saving the user from making errors caused by his or her relatively low dexterity.

In some implementations, a central "message exchange engine" may facilitate the message exchange thread between the participants. The message exchange engine may monitor messages directed between participants to determine when one or more criteria (*e.g*., semantic or syntactic) are satisfied. Based on one or more items (*e.g*., sentences, words, phrases, images, sounds) in the exchanged messages that satisfied the criteria, the message exchange engine may form a search query. Content responsive to the search query, which may be obtained by the message exchange engine by submitting the search query to one or more components of a knowledge system, may then be incorporated into the message exchange thread, *e.g.,* as one or more graphical elements that are associated with the responsive content.

"Graphical elements" may include text, images, and any other visual elements that may or may not be interactive, such as applets (*e.g.,* calculator, translator, *etc.*). Graphical elements may convey, or may be selectable to convey, information pertaining to the content responsive to the aforementioned search query. In some implementations, the graphical elements may be links to electronic documents (*e.g*., hyperlinks) or links to one or more applications installed on a client device.

In some implementations, the graphical elements may include text and/or pictures that convey information about a known entity (*e.g*., person, place, thing) mentioned in one or more messages exchanged between the two or more participants. Suppose one participant poses the question to another participant, "Who was president before Herbert Hoover," and suppose the other participant does not know the answer. Rather than the other participant having to switch out of the message exchange client to consult a search engine using another application such as a web browser, the message exchange engine may (automatically or in response to a participant command) submit this question as a search query to a search engine behind the scenes. The message exchange engine may then incorporate the answer (Calvin Coolidge) into a transcript of the ongoing message exchange that is displayed in a graphical user interface of at least one of the message exchange clients.

In some implementations, graphical elements incorporated into a message exchange thread may be selectable by a participant to automatically add text to the message exchange thread on behalf of the participant. For example, the generated search query may seek the most popular responses to a message added to the message exchange thread by a first participant. Graphical elements representing the most popular responses may be rendered in a second participant's graphical interface. The second participant may then select the graphical element that includes the most suitable response, and the response may be automatically added to the transcript. In some implementations, the first participant may not be able to discern that the text added to the transcript was not composed manually by the second participant. It will be appreciated that augmentation of the message exchange thread with information and/or selectable elements of the kind described above may be of particular benefit to users with low dexterity, or users who would otherwise find it difficult to make inputs to a device, e.g. to add text to the exchange thread or to operate another application running in the device. The incorporation of such selectable elements and information directly in the thread may also reduce the number of erroneous inputs to the device, which may otherwise result from a user with relatively low dexterity having to make a relatively large number of user inputs in order to access the information. The reduction in erroneous user inputs, and corresponding reduction in erroneous operations, may have an overall effect of reducing the load on the computer resources in the device. There may also be a reduction in the load on resources outside of the device, for example in data networks and other networked computing apparatus in communication with the device.

In some implementations, a computer implemented method may be provided that includes the following operations: examining an ongoing message exchange thread between two or more participants operating two or more message exchange clients; identifying, based on the examining, one or more items for forming a search query, wherein the one or more items are identified in one or more messages directed by one of the two or more participants to another of the two or more participants as part of the ongoing message exchange thread, without a participant specifically identifying the one or more items as a search query; forming the search query with the one or more identified items; obtaining content responsive to the search query; and incorporating, into the message exchange thread, one or more graphical elements associated with the responsive content.

This method and other implementations of technology disclosed herein may each optionally include one or more of the following features.

In various implementations, the incorporating may include requesting that at least one of the message exchange clients insert the one or more graphical elements into a transcript of the ongoing message exchange thread that is displayed in a graphical user interface of the at least one of the message exchange clients. In various implementations, the one or more graphical elements may include text or one or more images that convey the responsive content. In various implementations, the one or more graphical elements may include a translation of the one or more items. In various implementations, the one or more graphical elements may be selectable by a participant to automatically add predetermined text to the transcript on behalf of the participant.

In various implementations, the one or more graphical elements may link to one or more electronic documents that are responsive to the search query. In various implementations, the one or more graphical elements may link to an application installed on a computing device operating at least one of the message exchange clients, wherein the application is responsive to the search query. In various implementations, the one or more graphical elements may include an applet that is operable by a participant to perform one or more operations. In various implementations, the applet may include a calculator, a translator, and/or a game.

In various implementations, the method may further include identifying, from a knowledge base containing records of known entities and relationships therebetween, a first entity associated with the one or more items. In various implementations, the responsive content may include information associated with the first entity. In various implementations, the method may further include identifying, by one or more of the processors, from the knowledge base, a second entity that is related to the first entity. In various implementations, the one or more graphical elements may convey information associated with the second entity. In various implementations, the one or more graphical elements may convey information about one or more attributes of the first entity. In various implementations, content responsive to the search query is obtained from a client computing device operated by a participant of the message exchange thread.

Other implementations may include a non-transitory computer readable storage medium storing instructions executable by a processor to perform a method such as one or more of the methods described above. Yet another implementation may include a system including memory and one or more processors operable to execute instructions, stored in the memory, to implement one or more modules or engines that, alone or collectively, perform a method such as one or more of the methods described above.

It should be appreciated that all combinations of the foregoing concepts and additional concepts described in greater detail herein are contemplated as being part of the subject matter disclosed herein. For example, all combinations of claimed subject matter appearing at the end of this disclosure are contemplated as being part of the subject matter disclosed herein.

### Brief Description of the Drawings

Fig. 1 illustrates an environment in which one or more graphical elements may be incorporated into a message exchange thread, in accordance with various implementations.
Fig. 2, Fig. 3, Fig. 4, Fig. 5, Fig. 6, Fig. 7, Fig. 8, and Fig. 9 depict examples of how client devices may render a graphical user interface for a message exchange client, in accordance with various implementations.
Fig. 10 depicts a flow chart illustrating an example method of augmenting a transcript of an ongoing message exchange with graphical elements, in accordance with various implementations.
Fig. 11 schematically depicts an example architecture of a computer system.

### Detailed Description

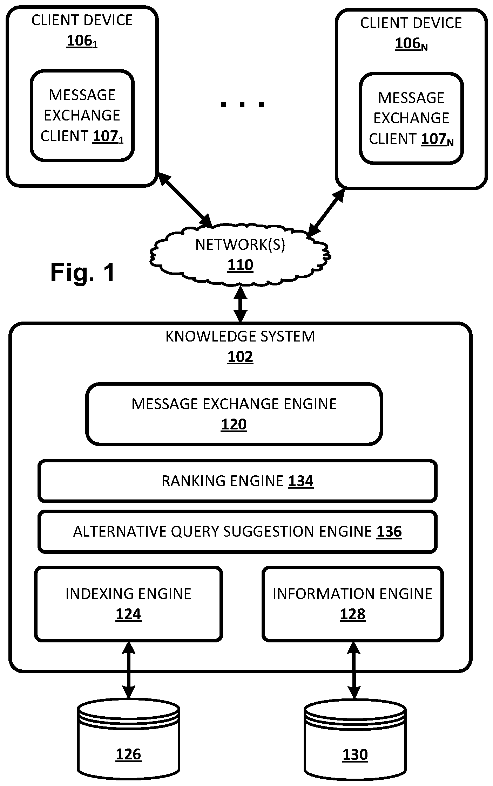

Fig. 1 illustrates an environment in which one or more graphical elements may be incorporated into a message exchange thread. The example environment includes a plurality of client devices 106_{1-N} and a knowledge system 102. Knowledge system 102 may be implemented in one or more computers that communicate, for example, through a network. Knowledge system 102 is an example of an information retrieval system in which the systems, components, and techniques described herein may be implemented and/or with which systems, components, and techniques described herein may interface.

A user may interact with knowledge system 102 via a client device 106. Each client device 106 may be a computer coupled to the knowledge system 102 through one or more networks 110 such as a local area network (LAN) or wide area network (WAN) such as the Internet. Each client device 106 may be, for example, a desktop computing device, a laptop computing device, a tablet computing device, a mobile phone computing device, a computing device of a vehicle of the participant (*e.g*., an in-vehicle communications system, an in-vehicle entertainment system, an in-vehicle navigation system), or a wearable apparatus of the participant that includes a computing device *(e.g.,* a watch of the participant having a computing device, glasses of the participant having a computing device). Additional and/or alternative client devices may be provided. The participant likely will operate a plurality of computing devices that collectively form a coordinated "ecosystem" of computing devices operated by and/or owned by the participant. However, for the sake of brevity, examples described in this disclosure will focus on the participant operating a single client device 106.

Each client device 106 may operate a variety of different applications, such as a message exchange client 107. Message exchange client 107 may come in various forms. In some implementations, message exchange client 107 may come in the form of a short messaging service ("SMS") and/or multimedia messaging service ("MMS") client, an online chat client *(e.g.,* instant messenger, Internet relay chat, or "IRC," *etc.),* a messaging application associated with a social network, and so forth. In some implementations, message exchange client 107 may be implemented within a webpage rendered by a web browser (not depicted).

Each of client device 106 and knowledge system 102 may include one or more memories for storage of data and software applications, one or more processors for accessing data and executing applications, and other components that facilitate communication over a network. The operations performed by client device 106 and/or knowledge system 102 may be distributed across multiple computer systems. Knowledge system 102 may be implemented as, for example, computer programs running on one or more computers in one or more locations that are coupled to each other through a network.

In various implementations, knowledge system 102 may include a message exchange engine 120, an indexing engine 124, an information engine 128, a ranking engine 134, and an alternative query suggestion engine 136. In some implementations one or more of engines 120, 124, 128, 134, and/or 136 may be omitted. In some implementations all or aspects of one or more of engines 120, 124, 128, 134, and/or 136 may be combined. In some implementations, one or more of engines 120, 124, 128, 134, and/or 136 may be implemented in a component that is separate from knowledge system 102. In some implementations, one or more of engines 120, 124, 128, 134, and/or 136, or any operative portion thereof, may be implemented in a component that is executed by client device 106.

Indexing engine 124 may maintain an index 126 for use by knowledge system 102. The indexing engine 124 processes documents and updates index entries in the index 126, for example, using conventional and/or other indexing techniques. For example, the indexing engine 124 may crawl one or more resources such as the World Wide Web and index documents accessed via such crawling. As another example, the indexing engine 124 may receive information related to one or documents from one or more resources such as web masters controlling such documents and index the documents based on such information. A document is any data that is associated with a document address. Documents include web pages, word processing documents, portable document format (PDF) documents, images, emails, calendar entries, videos, and web feeds, to name just a few. Each document may include content such as, for example: text, images, videos, sounds, embedded information *(e.g.,* meta information and/or hyperlinks); and/or embedded instructions (*e.g.,* ECMAScript implementations such as JavaScript).

Information engine 128 may maintain another index 130 that includes or facilitates access to non-document-specific information for use by the knowledge system 102. For example, knowledge system 102 may be configured to return information in response to search queries that appear to seek specific information. If a participant searches for "Ronald Reagan's birthday," knowledge system 102 may receive, *e.g*., from information engine 128, the date, "February 6, 1911." This information may be returned to the participant as a part of search results that is separate from documents received from indexing engine 124. In various implementations, index 130 itself may contain information, or it may link to one or more other sources of information, such as online encyclopedias, almanacs, and so forth. In various implementations, index 126 or index 130 may include mappings between queries (or query terms) and documents and/or information.

In this specification, the term "database" and "index" will be used broadly to refer to any collection of data. The data of the database and/or the index does not need to be structured in any particular way and it can be stored on storage devices in one or more geographic locations. Thus, for example, the indices 126 and 130 may include multiple collections of data, each of which may be organized and accessed differently.

Ranking engine 134 may use the indices 126 and/or 130 to identify documents and other information responsive to a search query, for example, using conventional and/or other information retrieval techniques. The ranking engine 134 may calculate scores for the documents and other information identified as responsive to a search query, for example, using one or more ranking signals. Each ranking signal may provide information about the document or information itself, the relationship between the document or information and the search query, and/or the relationship between the document or information and the participant performing the search.

Alternative query suggestion engine 136 may use one or more signals and/or other information, such as a database of alternative query suggestions (not depicted) and/or information about a user of client device 106 *(e.g.,* search history, GPS location, user attributes), to generate alternative query suggestions to provide to client device 106 along with any search results. As a user types consecutive characters of the search query, alternative query suggestion engine 136 may identify alternative queries that may be likely to yield results that are useful to the user. For instance, assume the client device 106 is located in Chicago, and has typed the characters, "restaur." Alternative query suggestion engine 136 may, based on a location signal indicating that the client device 106 is in Chicago and a search history signal indicating a user's preference for restaurants with live music, suggest a query, "restaurants in Chicago with live music." As another example, for a user who has typed "Ronald Reagan's birt," alternative query suggestion engine 136 may, *e.g*., using techniques such as prefix matching, determine and suggest alternative queries such as "Ronald Reagan's birthday," "Ronald Reagan's birthplace," "Ronald Reagan's birth control position," and so forth. Alternative query suggestion engine 136 may provide other suggestions as well, such as spelling-corrected versions of a partially-formed search query.

In various implementations, message exchange engine 120 may be configured to examine an ongoing message exchange thread between two or more users operating two or more message exchange clients 107. Based on this examination, message exchange engine 120 may identify one or more items to be used to form a search query. In various implementations, the one or more items may be identified in one or more messages directed by one of the two or more participants to another of the two or more participants as part of the ongoing message exchange thread, *e.g*., without a participant specifically identifying the one or more items as a search query. For example, if one participant mentions an entity such as a person, place, or thing, that may trigger message exchange engine 120 to incorporate the mentioned entity into a search query.

Message exchange engine 120 may then obtain content such as documents and information that are responsive to the search query, *e.g*., from indexing engine 124, information engine 128, and/or data local to client devices 106 such as SMS/MMS history, calendar entries, media content (e.g., photographs, videos, games), and so forth. In various implementations, content responsive to the search query may further include alternative query suggestions returned from alternative query suggestion engine 136. In some implementations, content responsive to the search query may be ranked by ranking engine 134 prior to it being provided to message exchange engine 120.

Based on the content that is responsive to the search query, message exchange engine 120 may incorporate various items associated with the responsive content, such as graphical elements (words, images, animations, applets), sounds, *etc*., into a message exchange thread between two or more participants operating two or more message exchange clients 107. The incorporated items may be viewable by one or more of the participants in the message exchange thread, *e.g.,* on a graphical user interface associated with a message exchange client 107 that depicts a transcript of the ongoing message exchange thread. As used herein, a "transcript" may refer to a live record of text, images, sounds, and/or applets exchanged and/or viewed by one or more participants of a message exchange thread. In some implementations, a transcript of a message exchange thread may be updated in real time or near real time as the participants converse.

Message exchange engine 120 may incorporate one or more items into a message exchange thread between multiple message exchange clients 107 in a variety of ways. In some implementations, message exchange engine 120 may request that at least one message exchange client 107 participating in the message exchange thread insert one or more graphical elements associated with the responsive content into a transcript of the ongoing message exchange thread that is displayed in a graphical user interface of the at least one message exchange client 107. In some scenarios, the graphical elements may be incorporated into transcripts rendered by more than one message exchange client 107, such as in transcripts rendered by all message exchange clients 107 participating in the message exchange thread. In some implementations, message exchange engine 120 may simply provide responsive content to message exchange client 107, which may then select what content to incorporate into the message exchange thread.

Various types of graphical elements may be incorporated into the message exchange thread (and hence, into a transcript of the thread displayed by at least one message exchange client 107). In some implementations, the one or more graphical elements may include text that conveys information that is responsive to the search query formed by message exchange engine 120. Suppose a first participant operates her message exchange client 107 to pose a question to another participant, "What was the first state admitted into the union?" Message exchange engine 120 may, at the request of a participant or *sua sponte,* submit the question (or a variation thereof) to indexing engine 124 and/or information engine 128 as a search query. Indexing engine 124 and/or information engine 128 may provide to message exchange engine information responsive to the search query, such as an indication that Delaware was the first state that was admitted into the United States of America. Additional responsive information may be included as well, such as the date Delaware was admitted, what state was admitted after, *etc.* Message exchange engine 120 may then incorporate some or all of this information into the message exchange thread, so that it is incorporated into a transcript displayed in the graphical user interface of, for instance, the message exchange client 107 operated by the participant that posed the question.

In addition to or instead of text, in various implementations, the one or more graphical elements that are incorporated into the message exchange thread may include one or more images that convey the content responsive to the search query. In the above-described scenario, for instance, an image of the state of Delaware and/or a state flag of Delaware may be incorporated into the message exchange thread, in addition to or instead of text about Delaware.

In many instances, the information responsive to the search query may be too unwieldy *(e.g.,* too long, too much detail, *etc.)* to feasibly incorporate into the message exchange thread without disrupting the flow of the conversation. In such situations, a subset of the total responsive information may be selected (*i.e.,* the total responsive information may be culled) for incorporation into the thread. The subset may include, for instance, snippets of text/images extracted from one or more responsive documents (e.g., the N highest ranked documents), and/or information provided by information engine 128.

In some implementations, message exchange engine 120 may select the subset (or cull the responsive information) for incorporation into the message exchange thread. In other implementations, message exchange engine 120 may provide the comprehensive responsive information to a message exchange client 107, and the client 107 may perform the culling. For example, in some implementations, message exchange client 107 may cull the information based on a screen size of the host client device 106. In yet other implementations, both message exchange engine 120 and message exchange client 107 may perform culling. In some implementations, the top N search results may be selected for incorporation into the message exchange thread. *N* may be selected based on, for instance, screen size, participant preferences, *etc.,* or may be manually selected (*e.g., N* could be set to five, ten, two, one, *etc.)*

Whether text or images are incorporated into the message exchange thread, in various implementations, the graphical elements may link to one or more electronic documents that are responsive to the search query, such that a participant need only select the graphical elements to be directed to a new resource *(e.g.,* a web browser displaying the information). In some implementations, the one or more graphical elements may link to an application-installed on a client device 106 operating at least one of the message exchange clients 107-that is responsive to the search query. For example, if a participant inputs into the message exchange thread, "boy, I could sure go for dinner at Frank's." One or more graphical elements related to the location Frank's may be incorporated into the message exchange thread, *e.g.,* by message exchange engine 120. The one or more graphical elements may be selectable to open one application on client device 106 that is operable specifically to create a reservation at the location Frank's, and/or another application that is operable to display a map and/or directions to Frank's.

In some implementations, in addition to or instead of linking to an application, the one or more graphical elements themselves may be applications. In particular, a graphical element incorporated into a message exchange thread may come in the form of a so-called "applet" that is operable by a participant without switching applications (which may be preferable on a mobile device that only displays one app at a time) to perform one or more operations. Various types of applets may be incorporated into a message exchange thread (and hence may appear in a transcript thereof displayed in a message exchange client 107), including but not limited to games, calculators, translators, and so forth.

In some implementations, the one or more graphical elements may include a translation of the one or more items identified by message exchange engine 120 to form the search query. Suppose one participant poses the question, "what is German for 'airplane'?" Message exchange engine 120 may submit this question (or a variation thereof) to indexing engine 124 and/or information engine 128, and may receive a translation ("Flugzeug") in response. Message exchange engine 120 may then incorporate this information into the message exchange thread, where it may be displayed in the transcript, for instance, as a response to the participant's question.

In addition to or instead of conveying information responsive to the search query, in some implementations, the one or more graphical elements incorporated into the message exchange thread may be selectable by a participant to automatically add predetermined text to the transcript on behalf of the participant. For example, when a participant poses a question to another participant, that question may be submitted, *e.g*., by message exchange engine 120, to indexing engine 124 and/or information engine 128 as a search query. In some implementations, the information that is returned in response to the search query may be the *N* most popular or likely responses to that question. These answers may be incorporated into selectable graphical elements (*e.g*., buttons rendered on a touch screen) that are rendered in a graphical user interface of the message exchange client 107 operated by the participant to which the question was posed. The questioned participant may then actuate the button corresponding to her selected response, and the selected response may be incorporated into the message exchange thread. In some implementations, the participant that posed the question may be presented with the response in a manner that does not suggest that an auto-response was generated. For example, the auto-response may be portrayed in the transcript as an answer from the questioned participant.

In some implementations, one or more graphical elements may be incorporated into the message exchange thread that are generated based on information received from alternative query suggestion engine 136 in response to a query extracted from content of the message exchange thread. For example, suppose a participant begins operating her message exchange client 107 to pose the question, "Who was the eighteenth president of the United States?" Before the participant has completed the question, say, after typing the following characters-"who was the eight"-her partially-typed question may be submitted to knowledge system 102. Knowledge system 102 may obtain one or more alternative query suggestions from alternative query suggestion engine 136 that are potentially completed versions of what the participant is currently typing. In response to receiving these completed versions, client device 106 may render, as part of a graphical user interface of message exchange client 107, one or more graphical elements, such as buttons, that the participant can select to complete her query. For example, the participant may see the following two buttons appear: "Who was the eighth president of the United States?", and "Who was the eighteenth president of the United States?" After the participant selects an alternative query suggestion and the selected auto-text is displayed in the thread, in some implementations, one or more follow-up questions may be provided, *e.g*., by alternative query suggestion engine 136, such as "In what years did that President serve?", or "What was that President's most notable accomplishment?" Selectable graphical elements such as buttons corresponding to these follow-up questions may be provided to the participant in case, for example, the participant is quizzing someone else on history, *e.g*., as part of a study session.

In some implementations, knowledge system 102 may have, *e.g.,* as part of information engine 128 and/or another component, a so-called knowledge base that contains records of known entities (*e.g*., people, places, things) and relationships between the known entities. In some implementations, such a knowledge base may be implemented, *e.g*., in index 130, as a graph in which nodes represent entities and edges represent relationships between entities, although this is not required. In some such implementations, information about entities from such a knowledge base may be made available to message exchange engine 120, *e.g.,* in response to a search query formed and submitted by message exchange engine 120 as described above.

In some implementations, the knowledge base may be used, *e.g.,* by message exchange engine 120 and/or information engine 128, to identify a first entity mentioned in the one or more messages exchanged between the two or more participants as part of the message exchange thread. Information responsive to a search query related to the entity may then be incorporated into the message exchange thread. For example, suppose a participant submits into the message exchange thread a message such as "Babe Ruth was the greatest!" "Babe Ruth" may be identified, *e.g*., by information engine 128 based on a knowledge base stored in index 130, along with one or more attributes of Babe Ruth, and/or one or more related entities, such as one or more teams he played for (*e.g.,* the New York Yankees), his family members, his teammates, years active, years alive, and so forth. One or more pieces of this information may then be selected and automatically incorporated (*e.g*., as one or more graphical elements) into the message exchange thread, *e.g.,* by message exchange engine 120 or by a message exchange client 107. For example, when Babe Ruth is mentioned by a participant in a message exchange thread, information about Babe Ruth and/or other baseball players may also be incorporated into the thread so that it is viewable by at least one participant via a graphical user interface of her message exchange client 107.

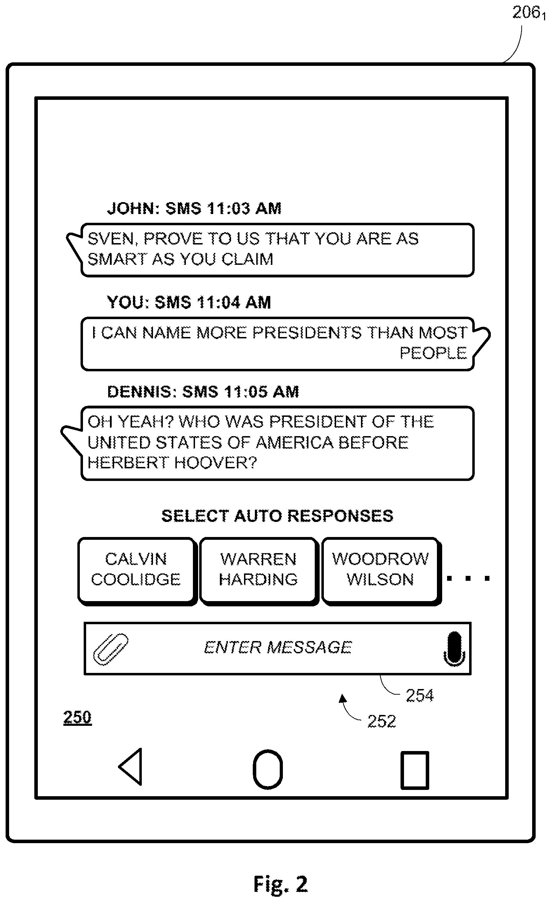

Fig. 2 depicts an example client device 206₁ operated by a participant named Sven. Client device 206₁ includes a graphical user interface 250 associated with a message exchange client (not depicted specifically in Fig. 2) that operates on client device 206₁. Graphical user interface 250 displays a transcript 252 of a message exchange thread between Sven and two other participants, John and Dennis. Graphical user interface 250 also includes a text input field 254 that Sven can use to input text or other content into the message exchange thread, *e.g.,* in response to previous statements by the other two. In this example, John has asked Sven to prove how smart he is. Sven ("You" in Fig. 2 because this is Sven's client device 206₁) claimed he can name more US Presidents than most people. Dennis challenged Sven by asking, "Who was President of the United States of America before Herbert Hoover?"

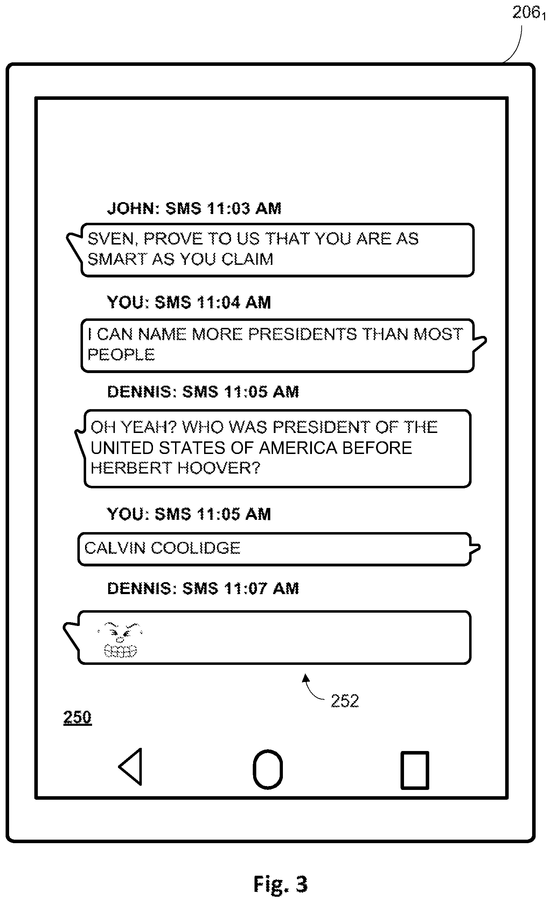

At this point in the conversation, the question posed by Dennis has been submitted as a search query to, for instance, indexing engine 124 and/or information engine 128. One or both of these engines may determine, *e.g*., using the aforementioned entity knowledge base, the identities of one or more US Presidents that preceded Herbert Hoover, and may send this information back to client device 206₁. Consequently, a plurality of graphical elements (three of which are visible in Fig. 2) have been rendered in the version of the transcript 252 rendered by graphical user interface 250 on client device 206₁ operated by Sven, listing Calvin Coolidge, Warren Harding, and Woodrow Wilson. In various implementations, these selectable elements may or may not be visible on graphical user interfaces of the other participants' message exchange clients. Sven may select one of these graphical elements to cause an auto-response to be incorporated into the message exchange thread on his behalf. An example of what this might look like is depicted in Fig. 3, in which Sven's answer has replaced the selectable icons after Sven selected "Calvin Coolidge" (perhaps because Sven assumed Dennis sought the immediate predecessor of Herbert Hoover).

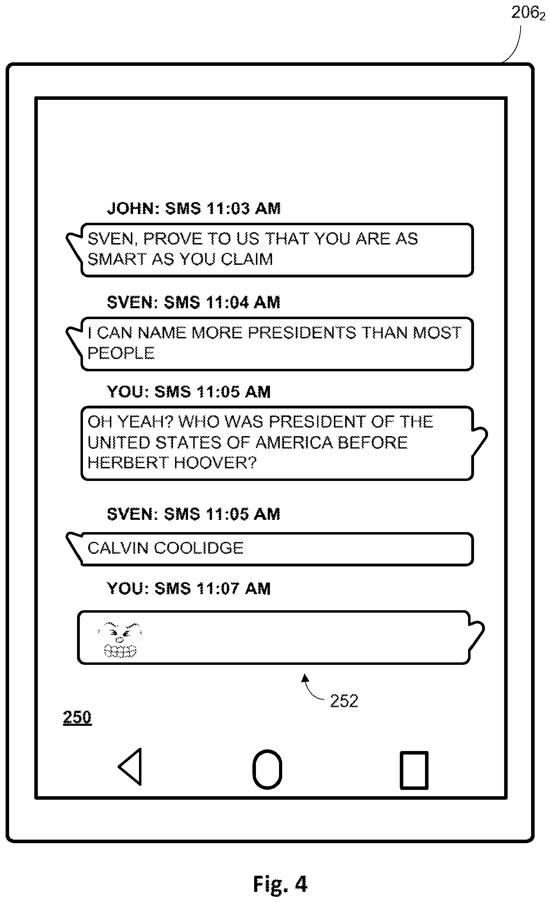

Fig. 4 depicts the same message exchange thread as was depicted in Figs. 2 and 3, except from the point of view of Dennis' client device 206₂. Here, the answer "Calvin Coolidge," which Sven may have selected using the graphical elements depicted in Fig. 2, appears as though it was composed by Sven. However, that is not meant to be limiting, and in other implementations, the answer Calvin Coolidge may be portrayed as being inserted into the conversation by some third party entity such as a personal assistant module.

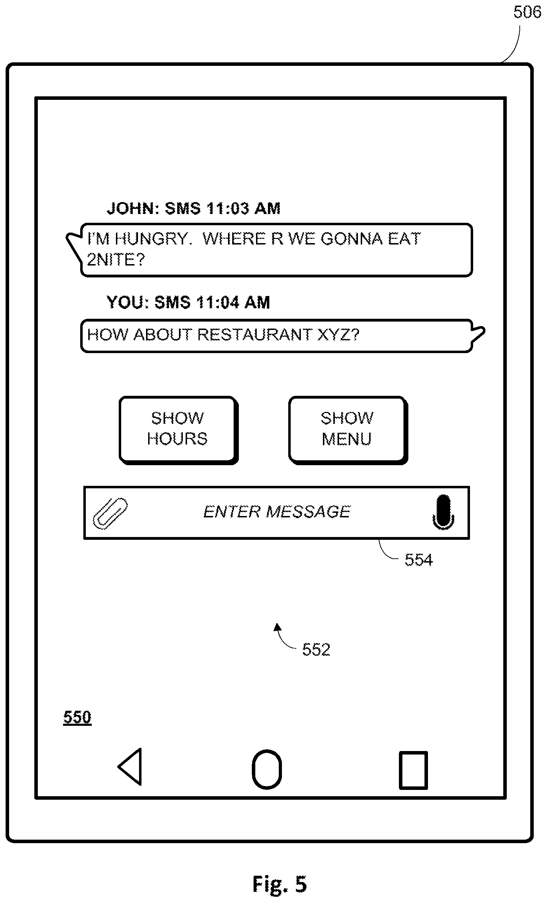

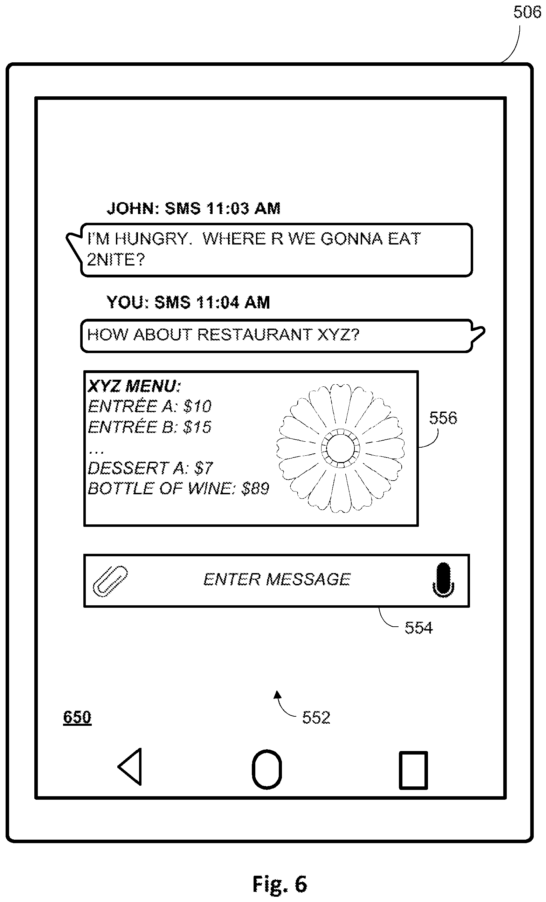

Fig. 5 depicts another example client device 506 operated by a participant named Sven. In this example, Sven is participating in a message exchange thread with another participant named John. In response to John's statement that he is hungry, and his question about eating, Sven inquired about John's feelings towards a particular Restaurant XYZ. Restaurant XYZ has been submitted as a search query, *e.g.,* to indexing engine 124 and/or information engine 128, and responsive content has been received. Based on this responsive content, the transcript 552 displayed in Sven's graphical user interface 550 has been augmented with graphical elements "SHOW HOURS" and "SHOW MENU" that Sven may select in order to display, *e.g*., as part of transcript 552 within graphical user interface 550, hours or a menu associated with the restaurant. If Sven selects "SHOW MENU," then graphical user interface 550 may transition to that depicted in Fig. 6, where an image 556 of a menu for XYZ is depicted.

A transcript of a message exchange thread that appears similar to that in Figs. 5 and 6 may be rendered in other similar scenarios. Suppose that instead of talking about a particular restaurant, the participants discuss a particular geographic location for vacation. One or more statements by the participants may be used to formulate a search query about the geographic location, which may be submitted to indexing engine 124 and/or information engine 128. The information responsive to the search query may be used to, for instance, render buttons that allow the participant to select one or more attributes of the geographic location to display. For example, one button could be selectable to display weather data about the location. Another button could be selectable to display information about flights to the location. Another button could be selectable to display an event calendar associated with the location. And so on.

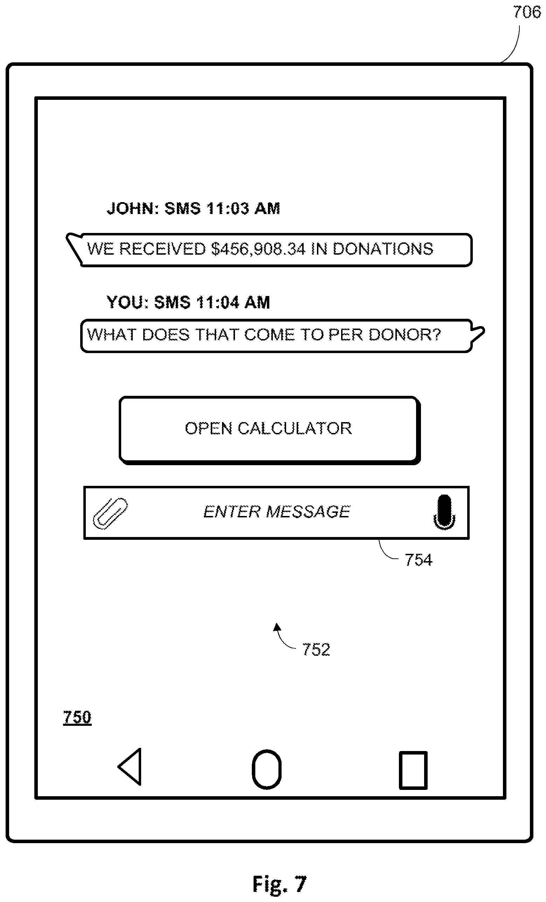

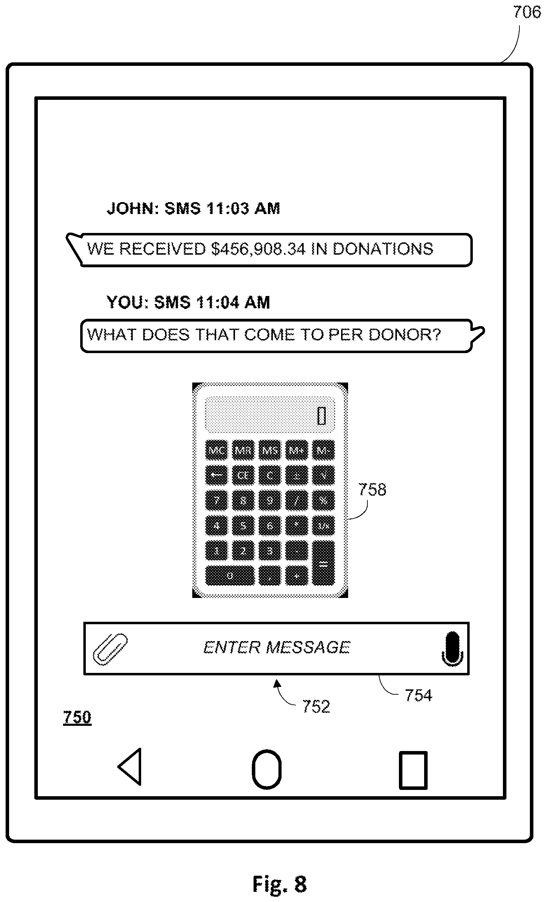

Fig. 7 depicts another example client device 706 rendering a graphical user interface 750 of a message exchange client (not depicted). Similar to before, a transcript 752 of a message exchange thread between the participant and another participant named John is depicted, including a text input field 754 for the participant operating client device 706 to input text or other content. In this example, John has stated that "We received $456,908.34 in donations." In response, the participant operating client device 706 posed the question, "what does that come to per donor?" This question, e.g., by virtue of including the verbal cue "per," causes a graphical element in the form of a button to be rendered to provide the option to the participant to open a calculator applet. Fig. 8 depicts one of example of what such an applet 758 might look like when operating in graphical user interface 750. Applet 758 may be visible and operable by the participant operating client device 706. In various implementations, applet 758 may or may not be visible and/or operable by John or other participants in the message exchange thread.

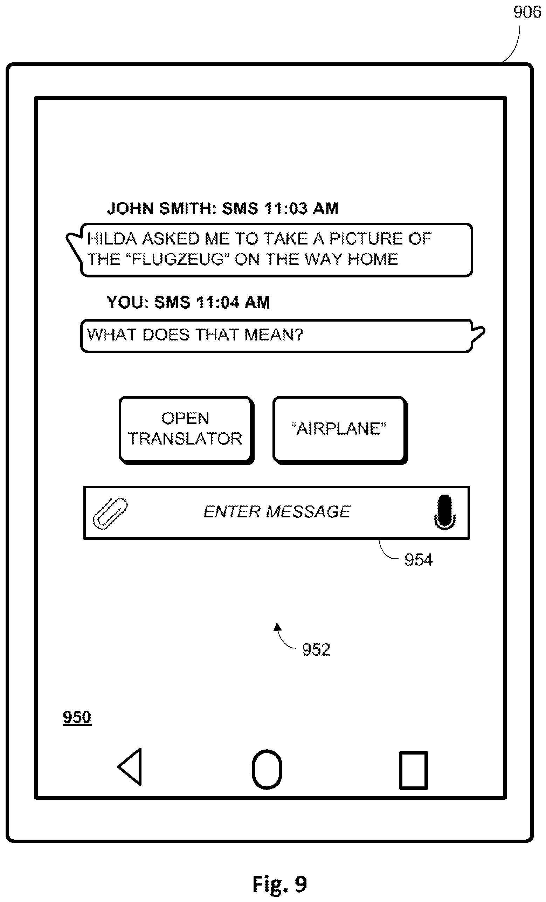

Fig. 9 depicts another example client device 906 rendering a graphical user interface 950 of a message exchange client (not depicted). Similar to before, a transcript 952 of a message exchange thread between the participant and another participant named John is depicted, including a text input field 954 for the participant operating client device 906 to input text or other content. In this example, John has stated that "Hilda asked me to take a picture of the "flugzeug" on the way home." The participant operating client device 906 asks, "What does that mean?" This question may cause one or more graphical elements to appear. On the left is a graphical element that is operable by the participant to open a "translator" applet (not depicted) in which the participant can type text she wishes to translate. On the right is a graphical element that shows a translation of the word "flugzeug" that was obtained by submitting the participant's question as a search query to knowledge system 102. It can be seen from this example that it was not only the participant's question that was submitted as a search query-the participant's question would have been too vague in isolation to obtain a proper translation because it did not contain the word to be translated. Rather, information was necessarily obtained from both the participant's question and John's prior statement in order to form a complete search query (*e.g*., "what is the English translation of 'flugzeug'") to which a responsive translation could be obtained. This demonstrates an aspect of the disclosure in which search queries may be built based on portions of multiple statements from multiple participants forming part of a message exchange thread. Search queries are not limited merely to statements from single participants.

While implementations described herein have demonstrated how disclosed techniques may be employed with message exchange threads that involved multiple human participants, this is not meant to be limiting. In various implementations, techniques described herein may be employed in so-called "single participant" conversations between a participant and an automated entity. For example, a personal assistant module may operate on one or more computing devices (*e.g*., smart phone, tablet, laptop, smart watch, vehicle navigation system, set top box, *etc.)* that form a coordinated "ecosystem" of computing devices associated with and operated by the participant. The personal assistant module may monitor (*e.g*., in response to the participant providing some sort of activation code word) for natural language questions/statements provided by the participant, usually but not always using speech input. The personal assistant module may then perform various actions, such as searching information personal to the participant or publicly available data *(e.g.,* from indexing engine 124 and/or information engine 128), and provide the participant with a response, *e.g*., in audible form and/or as text rendered on a display. In situations in which dialog between the personal assistant module and the participant is rendered on a graphical user interface, *e.g*., as an ongoing transcript, techniques described herein may be employed to enhance the participant's experience.

Additionally, in examples described herein, data responsive to search queries formed based on message exchange thread contents has been obtained from the various sources shown in Fig. 1. However, this is not meant to be limiting. Responsive data may be pulled from other sources as well. For example, scripted auto-responses such as "yes" and "no" may be made available in response to a statement in a message exchange satisfying one or more semantic or syntactic criteria and/or satisfying one or more heuristics. And while indexing engine 124 and information engine 128 may have access to global information that is not personal to particular participants, this is not meant to be limiting. In some instances, search queries may be used to search information that is personal to a participant (assuming the participant provides permission first). For example, a participant's own emails, texts, calendar entries, social network status updates, and so forth, may be used as potentially searchable sources for which search queries may be used to search.

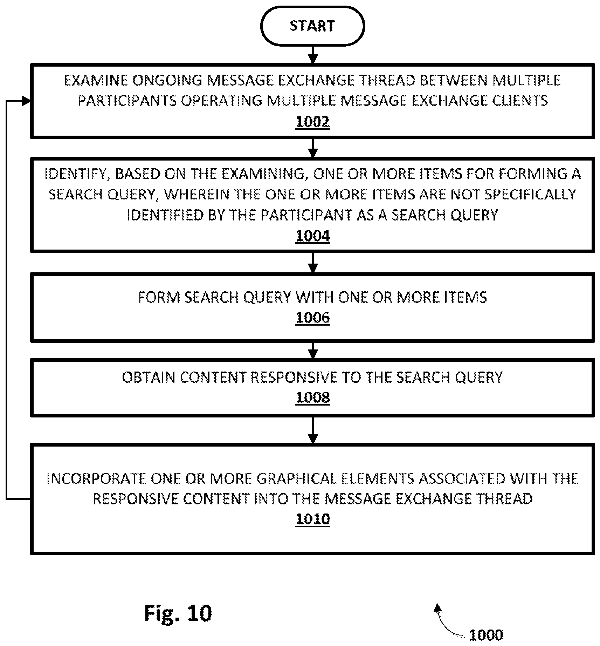

Referring now to Fig. 10, one example method 1000 of augmenting a message exchange thread with multiple participants is described. For convenience, the operations of the flow chart are described with reference to a system that performs the operations. This system may include various components of various computer systems, including various engines described herein. Moreover, while operations of method 1000 are shown in a particular order, this is not meant to be limiting. One or more operations may be reordered, omitted or added.

At block 1002, the system may examine an ongoing message exchange thread between multiple participants operating multiple message exchange clients. For example, if the message exchange thread is hosted or otherwise facilitated by message exchange engine 120, then message exchange engine 120 may monitor content of the thread to determine whether one or statements offered by one or more participants should be used to generate a search query for submission to, *e.g*., indexing engine 124 and/or information engine 128. Additionally or alternatively, each message exchange client 107 may monitor content provided by its own participant. In this sense, a participant may have more direct control over whether his or her statements are incorporated as search queries that are submitted to knowledge system 102.

At block 1004, the system may identify, based on the examining at block 1002, one or more items for forming a search query. In some implementations, a participant posing a question may constitute an event that triggers formulation of a search query. In other implementations, other events may give rise to one or more participant statements being used to form a search query, such as one or more participants mentioning one or more entities *(e.g.,* person, place, thing, *etc.),* an explicit request by one or more participants, and so forth. In some implementations, most participant statements forming part of a message exchange thread may be submitted as search queries in one form or another to various components of knowledge system 102. The responsive content may be culled by, for instance, message exchange engine 120 and/or message exchange clients 107, e.g., based on relevance scores or other ranking data provided by, for instance, ranking engine 134.

At block 1006, a search query may be formed with the one or more items identified at block 1004. As noted above, a participant's statement need not necessarily be submitted verbatim as a search query. Rather, one or more items within one or more participants' statements may be used together, *e.g.,* by message exchange engine 120 and/or one or more message exchange clients 107, to build a coherent search query.

At block 1008, the formulated search query may be submitted, *e.g*., by message exchange engine 120 and/or by one or more message exchange clients 107, to one or more components of knowledge system 102, and responsive content may be obtained. At block 1010, one or more graphical elements *(e.g.,* text, pictures, videos, animations, applets, *etc.)* that are associated with the responsive content may be incorporated into the message exchange thread, *e.g.,* to appear in a transcript rendered in a graphical user interface of a message exchange client operated by one or more participants in the thread. As noted above, in various implementations, the responsive content may be too unwieldy to incorporate completely into a message exchange thread. Accordingly, in various implementations, components such as message exchange engine 120 and/or message exchange clients 107 may "prune" or "cull" responsive content to a subset that is more suitable for presentation as part of a message exchange transcript.

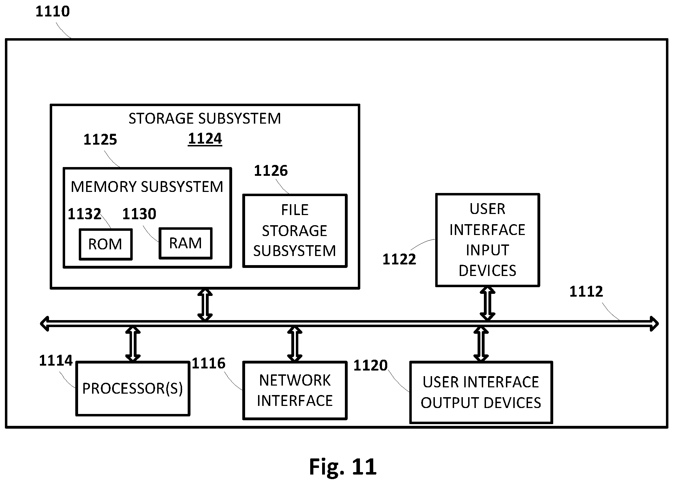

Fig. 11 is a block diagram of an example computer system 1110. Computer system 1110 typically includes at least one processor 1114 which communicates with a number of peripheral devices via bus subsystem 1112. These peripheral devices may include a storage subsystem 1124, including, for example, a memory subsystem 1125 and a file storage subsystem 1126, user interface output devices 1120, user interface input devices 1122, and a network interface subsystem 1116. The input and output devices allow user interaction with computer system 1110. Network interface subsystem 1116 provides an interface to outside networks and is coupled to corresponding interface devices in other computer systems.

User interface input devices 1122 may include a keyboard, pointing devices such as a mouse, trackball, touchpad, or graphics tablet, a scanner, a touchscreen incorporated into the display, audio input devices such as voice recognition systems, microphones, and/or other types of input devices. In general, use of the term "input device" is intended to include all possible types of devices and ways to input information into computer system 1110 or onto a communication network.

User interface output devices 1120 may include a display subsystem, a printer, a fax machine, or non-visual displays such as audio output devices. The display subsystem may include a cathode ray tube (CRT), a flat-panel device such as a liquid crystal display (LCD), a projection device, or some other mechanism for creating a visible image. The display subsystem may also provide non-visual display such as via audio output devices. In general, use of the term "output device" is intended to include all possible types of devices and ways to output information from computer system 1110 to the user or to another machine or computer system.

Storage subsystem 1124 stores programming and data constructs that provide the functionality of some or all of the modules described herein. For example, the storage subsystem 1124 may include the logic to perform selected aspects of method 1000, and/or to implement one or more of message exchange client 107, message exchange engine 120, indexing engine 124, information engine 128, ranking engine 134, and/or alternative query suggestion engine 136.

These software modules are generally executed by processor 1114 alone or in combination with other processors. Memory 1125 used in the storage subsystem 1124 can include a number of memories including a main random access memory (RAM) 1130 for storage of instructions and data during program execution and a read only memory (ROM) 1132 in which fixed instructions are stored. A file storage subsystem 1126 can provide persistent storage for program and data files, and may include a hard disk drive, a floppy disk drive along with associated removable media, a CD-ROM drive, an optical drive, or removable media cartridges. The modules implementing the functionality of certain implementations may be stored by file storage subsystem 1126 in the storage subsystem 1124, or in other machines accessible by the processor(s) 1114.

Bus subsystem 1112 provides a mechanism for letting the various components and subsystems of computer system 1110 communicate with each other as intended. Although bus subsystem 1112 is shown schematically as a single bus, alternative implementations of the bus subsystem may use multiple busses.

Computer system 1110 can be of varying types including a workstation, server, computing cluster, blade server, server farm, or any other data processing system or computing device. Due to the ever-changing nature of computers and networks, the description of computer system 1110 depicted in Fig. 11 is intended only as a specific example for purposes of illustrating some implementations. Many other configurations of computer system 1110 are possible having more or fewer components than the computer system depicted in Fig. 11.

In situations in which the systems described herein collect personal information about users (or as often referred to herein, "participants"), or may make use of personal information, the users may be provided with an opportunity to control whether programs or features collect user information (*e.g*., information about a user's social network, social actions or activities, profession, a user's preferences, or a user's current geographic location), or to control whether and/or how to receive content from the content server that may be more relevant to the user. Also, certain data may be treated in one or more ways before it is stored or used, so that personal identifiable information is removed. For example, a user's identity may be treated so that no personal identifiable information can be determined for the user, or a user's geographic location may be generalized where geographic location information is obtained (such as to a city, ZIP code, or state level), so that a particular geographic location of a user cannot be determined. Thus, the user may have control over how information is collected about the user and/or used.

While several implementations have been described and illustrated herein, a variety of other means and/or structures for performing the function and/or obtaining the results and/or one or more of the advantages described herein may be utilized, and each of such variations and/or modifications is deemed to be within the scope of the implementations described herein. More generally, all parameters, dimensions, materials, and configurations described herein are meant to be exemplary and that the actual parameters, dimensions, materials, and/or configurations will depend upon the specific application or applications for which the teachings is/are used. Those skilled in the art will recognize, or be able to ascertain using no more than routine experimentation, many equivalents to the specific implementations described herein. It is, therefore, to be understood that the foregoing implementations are presented by way of example only and that, within the scope of the appended claims and equivalents thereto, implementations may be practiced otherwise than as specifically described and claimed. Implementations of the present disclosure are directed to each individual feature, system, article, material, kit, and/or method described herein. In addition, any combination of two or more such features, systems, articles, materials, kits, and/or methods, if such features, systems, articles, materials, kits, and/or methods are not mutually inconsistent, is included within the scope of the present disclosure.

## Claims

1. A computer-implemented method, comprising:
examining, by one or more processors, an ongoing message exchange thread between two or more participants operating two or more message exchange clients (107);
identifying, by one or more of the processors (1114), based on the examining, one or more items for forming a search query, wherein the one or more items are identified in one or more messages directed by one of the two or more participants to another of the two or more participants as part of the ongoing message exchange thread, without a participant specifically identifying the one or more items as a search query;
forming, by one of the one or more processors, the search query with the one or more identified items;
obtaining, by one or more of the processors, content responsive to the search query; and
incorporating, by one or more of the processors, into a transcript (552, 752, 952) of the ongoing message exchange thread that is displayed in a graphical user interface (550, 650, 750, 950) of at least one of the message exchange clients, one or more graphical elements (556, 758) associated with the responsive content, wherein the one or more graphical elements comprise:
an applet (758) that is operable by a participant without switching applications to perform one or more operations within the graphical user interface.

2. The computer-implemented method of claim 1, wherein the one or more graphical elements comprise text that conveys the responsive content.

3. The computer-implemented method of any preceding claim, wherein the one or more graphical elements comprise one or more images that convey the responsive content.

4. The computer-implemented method of claim 1, wherein the one or more graphical elements are selectable by a participant to automatically add predetermined text to the transcript on behalf of the participant.

5. The computer-implemented method of any preceding claim, wherein the one or more graphical elements comprise a translation of the one or more items.

6. The computer-implemented method of any preceding claim, wherein the one or more graphical elements link to:
one or more electronic documents that are responsive to the search query; or
an application installed on a computing device operating at least one of the message exchange clients, wherein the application is responsive to the search query.

7. The computer-implemented method of any preceding claim, wherein the applet comprises a calculator (758).

8. The computer-implemented method of any preceding claim, further comprising:
identifying, by one or more of the processors, from a knowledge base containing records of known entities and relationships therebetween, a first entity mentioned associated with the one or more items;
wherein the responsive content includes information associated with the first entity.

9. The computer-implemented method of claim 8, further comprising identifying, by one or more of the processors, from the knowledge base, a second entity that is related to the first entity;
wherein the one or more graphical elements convey information associated with the second entity.

10. The computer-implemented method of claim 8 or 9, wherein the one or more graphical elements convey information about one or more attributes of the first entity.

11. A system (1110) comprising memory (1125) and one or more processors (1114), the memory storing instructions that, when executed by the one or more processors, cause the one or more processors to perform the method of any of claims 1 to 10.

12. At least one non-transitory computer-readable medium comprising instructions that, in response to execution of the instructions by one or more processors, cause the one or more processors to perform the following operations:
examining an ongoing message exchange thread between two or more participants operating two or more message exchange clients (107);
identifying, based on the examining, one or more items for forming a search query, wherein the one or more items are identified in one or more messages directed by one of the two or more participants to another of the two or more participants as part of the ongoing message exchange thread, without a participant specifically identifying the one or more items as a search query;
forming the search query with the one or more identified items;
obtaining content responsive to the search query; and
incorporating, into a transcript (552, 752, 952) of the ongoing message exchange thread that is displayed on a graphical user interface (550, 650, 750, 950) of at least one of the message exchange clients, one or more graphical elements (556, 758) associated with the responsive content, wherein the one or more graphical elements comprise:
an applet (758) that is operable by a participant without switching applications to perform one or more operations within the graphical user interface.

13. The at least one non-transitory computer-readable medium of claim 12 comprising instructions that, in response to execution of the instructions by one or more processors, cause the one or more processors to perform the method of any of claims 2 to 10.

14. Apparatus configured to perform the method of any of claims 1 to 10.

15. A computer program comprising machine readable instructions that when executed by computing apparatus cause the method of any of claims 1 to 10 to be performed.

## Patentansprüche

1. Computerimplementiertes Verfahren, umfassend:
Untersuchen, durch einen oder mehrere Prozessoren, eines laufenden Nachrichtenaustausch-Threads zwischen zwei oder mehr Teilnehmern, die zwei oder mehr Nachrichtenaustausch-Clients (107) bedienen;
Identifizieren, durch einen oder mehrere der Prozessoren (1114), basierend auf der Untersuchung, eines oder mehrerer Elemente zur Formulierung einer Suchanfrage, wobei das eine oder die mehreren Elemente in einer oder mehreren Nachrichten identifiziert werden, die von einem der zwei oder mehr Teilnehmer an einen anderen der zwei oder mehr Teilnehmer als Teil des laufenden Nachrichtenaustausch-Threads gerichtet sind, ohne dass ein Teilnehmer spezifisch das eine oder die mehreren Elemente als Suchanfrage identifiziert;
Formulieren, durch einen des einen oder der mehreren Prozessoren, der Suchanfrage mit dem einen oder den mehreren identifizierten Elementen;
Erhalten, durch den einen oder die mehreren Prozessoren, von Inhalt in Reaktion auf die Suchanfrage, und Aufnehmen, durch den einen oder die mehreren Prozessoren, von einem oder mehreren mit dem zutreffenden Inhalt assoziierten grafischen Elementen (556, 758) in ein Transkript (552, 752, 952) des laufenden Nachrichtenaustausch-Threads, das auf einer grafischen Benutzeroberfläche (550, 650, 750, 950) zumindest eines der Nachrichtenaustausch-Clients angezeigt wird, wobei das eine oder die mehreren grafischen Elemente Folgendes umfassen:
ein Applet (758), das von einem Teilnehmer ohne Umschalten der Anwendungen betreibbar ist, um eine oder mehrere Operationen innerhalb der grafischen Benutzeroberfläche durchzuführen.

2. Computerimplementiertes Verfahren nach Anspruch 1, wobei das eine oder die mehreren grafischen Elemente Text umfassen, der den zutreffenden Inhalt vermittelt.

3. Computerimplementiertes Verfahren nach einem der vorhergehenden Ansprüche, wobei das eine oder die mehreren grafischen Elemente ein oder mehrere Bilder umfassen, die den zutreffenden Inhalt vermitteln.

4. Computerimplementiertes Verfahren nach Anspruch 1, wobei das eine oder die mehreren grafischen Elemente durch einen Teilnehmer auswählbar sind, um dem Transkript im Namen des Teilnehmers automatisch vorgegebenen Text hinzuzufügen.

5. Computerimplementiertes Verfahren nach einem der vorhergehenden Ansprüche, wobei das eine oder die mehreren grafischen Elemente eine Übersetzung des einen oder der mehreren Elemente umfassen.

6. Computerimplementiertes Verfahren nach einem der vorhergehenden Ansprüche, wobei das eine oder die mehreren grafischen Elemente eine Verknüpfung bereitstellen mit:
einem oder mehreren elektronischen Dokumenten, die auf die Suchanfrage zutreffen; oder
einer auf einem mindestens einen der Nachrichtenaustausch-Clients ausführenden Computergerät installierten Anwendung, wobei die Anwendung auf die Suchabfrage reagiert.

7. Computerimplementiertes Verfahren nach einem der vorhergehenden Ansprüche, wobei das Applet eine Rechenmaschine (758) umfasst.

8. Computerimplementiertes Verfahren nach einem der vorhergehenden Ansprüche, ferner umfassend: Identifizieren, durch einen oder mehrere der Prozessoren, in einer Wissensbasis, die Datensätze von bekannten Entitäten und Beziehungen zwischen diesen enthält, einer mit dem einen oder den mehreren Elementen assoziierten ersten aufgeführten Entität;
wobei der zutreffende Inhalt mit der ersten Entität assoziierte Informationen beinhaltet.

9. Computerimplementiertes Verfahren nach Anspruch 8, ferner umfassend das Identifizieren, durch einen oder mehrere der Prozessoren, einer zweiten Entität in der Wissensbasis, die mit der ersten Entität in Beziehung steht;
wobei das eine oder die mehreren grafischen Elemente mit der zweiten Entität assoziierte Informationen vermitteln.

10. Computerimplementiertes Verfahren nach Anspruch 8 oder 9, wobei das eine oder die mehreren grafischen Elemente Informationen über ein oder mehrere Attribute der ersten Entität vermitteln.

11. System (1110), das einen Speicher (1125) und einen oder mehrere Prozessoren (1114) umfasst, wobei auf dem Speicher Anweisungen gespeichert sind, die bei Ausführung durch den einen oder die mehreren Prozessoren den einen oder die mehreren Prozessoren zum Durchführen des Verfahrens nach einem der Ansprüche 1 bis 10 veranlassen.

12. Zumindest ein nicht-flüchtiges computerlesbares Medium, das Anweisungen umfasst, die in Reaktion auf die Ausführung der Anweisungen durch einen oder mehrere Prozessoren den einen oder die mehreren Prozessoren veranlassen, die folgenden Operationen auszuführen:
Untersuchen eines laufenden Nachrichtenaustausch-Threads zwischen zwei oder mehr Teilnehmern, die zwei oder mehr Nachrichtenaustausch-Clients (107) bedienen;
Identifizieren, basierend auf der Untersuchung, eines oder mehrerer Elemente zur Formulierung einer Suchanfrage, wobei das eine oder die mehreren Elemente in einer oder mehreren Nachrichten identifiziert werden, die von einem der zwei oder mehr Teilnehmer an einen anderen der zwei oder mehr Teilnehmer als Teil des laufenden Nachrichtenaustausch-Threads gerichtet sind, ohne dass ein Teilnehmer spezifisch das eine oder die mehreren Elemente als Suchanfrage identifiziert;
Formulieren der Suchanfrage mit dem einen oder den mehreren identifizierten Elementen, Erhalten von Inhalt in Reaktion auf die Suchanfrage; und
Aufnehmen von einem oder mehreren mit dem zutreffenden Inhalt assoziierten grafischen Elementen (556, 758) in ein Transkript (552, 752, 952) des laufenden Nachrichtenaustausch-Threads, das auf einer grafischen Benutzeroberfläche (550, 650, 750, 950) zumindest eines der Nachrichtenaustausch-Clients angezeigt wird, wobei das eine oder die mehreren grafischen Elemente Folgendes umfassen:
ein Applet (758), das von einem Teilnehmer ohne Umschalten der Anwendungen betreibbar ist, um eine oder mehrere Operationen innerhalb der grafischen Benutzeroberfläche durchzuführen.

13. Das zumindest eine nicht-flüchtige computerlesbare Medium nach Anspruch 12, das Anweisungen umfasst, die in Reaktion auf die Ausführung der Anweisungen durch einen oder mehrere Prozessoren den einen oder die mehreren Prozessoren veranlassen, das Verfahren nach einem der Ansprüche 2 bis 10 auszuführen.

14. Vorrichtung, die konfiguriert ist, das Verfahren nach einem der Ansprüche 1 bis 10 durchzuführen.

15. Computerprogramm, umfassend maschinenlesbare Anweisungen, die bei Ausführung durch eine Computervorrichtung bewirken, dass das Verfahren nach einem der Ansprüche 1 bis 10 durchgeführt wird.

## Revendications

1. Procédé mis en oeuvre par ordinateur, comprenant :
l'examen, par un ou plusieurs processeurs, d'un fil d'échange de messages en cours entre deux participants ou plus exploitant deux clients d'échange de messages (107) ou plus ;
l'identification, par un ou plusieurs processeurs (1114), sur base de l'examen, d'un ou plusieurs éléments pour la formation d'une requête de recherche, où le ou les éléments sont identifiés dans un ou plusieurs messages dirigés par un des deux ou plusieurs participants à un autre des deux ou plusieurs participants comme partie du fil d'échange de messages en cours, sans l'identification par un participant spécifique du ou des éléments comme une requête de recherche ;
la formation, par un ou plusieurs processeurs, de la requête de recherche avec le ou les éléments identifiés ;
l'obtention, par un ou plusieurs processeurs, du contenu de réponse à la requête de recherche ; et l'incorporation, par un ou plusieurs des processeurs, dans une transcription (552, 752, 952) du fil d'échange de messages en cours qui est affiché dans une interface utilisateur graphique (550, 650, 750, 950) d'au moins un des clients d'échange de messages (556, 758) associé au contenu de réponse, dans lequel le ou les éléments graphiques comprennent :
une applet (758) qui est exploitable par un participant sans changement des applications pour réaliser une ou plusieurs opérations dans l'interface utilisateur graphique.

2. Procédé mis en oeuvre par ordinateur selon la revendication 1, dans lequel le ou les éléments graphiques comprennent un texte qui transmet le contenu de réponse.

3. Procédé mis en oeuvre par ordinateur selon l'une quelconque des revendications précédentes, dans lequel le ou les éléments graphiques comprennent une ou plusieurs images qui transmettent le contenu de réponse.

4. Procédé mis en oeuvre par ordinateur selon la revendication 1, dans lequel le ou les éléments graphiques sont sélectionnables par un participant pour ajouter automatiquement un texte prédéterminé à la transcription au nom du participant.

5. Procédé mis en oeuvre par ordinateur selon l'une quelconque des revendications précédentes, dans lequel le ou les éléments graphiques comprennent une traduction du ou des éléments.

6. Procédé mis en oeuvre par ordinateur selon l'une quelconque des revendications précédentes, dans lequel le ou les éléments graphiques établissent un lien vers :
un ou plusieurs documents électroniques en réponse à la requête de recherche ; ou
une application installée sur un dispositif informatique exécutant au moins un des clients d'échange de messages, dans lequel l'application est en réponse à la requête de recherche.

7. Procédé mis en oeuvre par ordinateur selon l'une quelconque des revendications précédentes, dans lequel l'applet comprend une calculatrice (758) :

8. Procédé mis en oeuvre par ordinateur selon l'une quelconque des revendications précédentes, comprenant en outre : l'identification, par un ou plusieurs processeurs, d'une base de connaissances contenant des enregistrements d'entités connues et de relations entre elles, d'une première entité mentionnée associée au ou aux éléments ;
dans lequel le contenu de réponse comprend des informations associées à la première entité.

9. Procédé mis en oeuvre par ordinateur selon la revendication 8, comprenant en outre l'identification, par un ou plusieurs des processeurs, de la base de connaissances, d'une deuxième entité liée à la première entité ;
dans lequel le ou les éléments graphiques transmettent des informations associées avec la deuxième entité.

10. Procédé mis en oeuvre par ordinateur selon la revendication 8 ou 9, dans lequel le ou les éléments graphiques transmettent des informations sur un ou plusieurs attributs de la première entité.

11. Système (1110) comprenant une mémoire (1125) et un ou plusieurs processeurs (1114), la mémoire stockant des instructions qui, lorsqu'elles sont exécutées par un ou plusieurs processeurs, amènent le ou les processeurs à réaliser le procédé selon l'une quelconque des revendications 1 à 10.

12. Au moins un support lisible par ordinateur non transitoire comprenant des instructions qui, en réponse à l'exécution des instructions par un ou plusieurs processeurs, amènent le ou les processeurs à réaliser les opérations suivantes :
l'examen d'un fil d'échange de messages en cours entre deux participants ou plus exploitant deux clients d'échange de messages (107) ou plus ;
l'identification, sur base de l'examen, d'un ou plusieurs éléments pour la formation d'une requête de recherche, dans laquelle le ou les éléments sont identifiés dans un ou plusieurs messages dirigés par un des deux participants ou plus à un autre des deux participants ou plus comme partie du fil d'échange de messages en cours, sans l'identification par un participant spécifique du ou des éléments comme une requête de recherche ;
la formation de la requête de recherche avec le ou les éléments identifiés ; l'obtention du contenu de réponse à la requête de recherche ; et
l'incorporation, dans une transcription (552, 752, 952) du fil d'échange de messages en cours qui est affiché dans une interface utilisateur graphique (550, 650, 750, 950) d'au moins un des clients d'échange de messages, d'un ou plusieurs éléments graphiques (556, 758) associés au contenu de réponse, dans lequel le ou les éléments graphiques comprennent :
une applet (758) qui est exploitable par un participant sans changement des applications pour réaliser une ou plusieurs opérations dans l'interface utilisateur graphique.

13. Au moins un support lisible par ordinateur non transitoire selon la revendication 12, comprenant des instructions qui, en réponse à l'exécution des instructions par un ou plusieurs processeurs, amènent le ou les processeurs à réaliser le procédé selon l'une quelconque des revendications 2 à 10.

14. Appareil configuré pour réaliser le procédé selon l'une quelconque des revendications 1 à 10.

15. Programme informatique comprenant des instructions lisibles par machine qui, lorsqu'elles sont exécutées par un appareil informatique, amènent le procédé selon l'une quelconque des revendications 1 à 10 à être réalisé.
